# EUROPEAN PATENT SPECIFICATION

(11) **EP 2 325 494 B1**
(45) Date of publication and mention of the grant of the patent: **12.04.2017**
(21) Application number: 09176560.2
(22) Date of filing: 19.11.2009
(51) Int. Cl.: F04D 27/02

(54) **Torque-based sensor and control method for varying gas-liquid fractions of fluids for turbomachines**
Auf Drehmoment basierender Sensor und Steuerverfahren zur Veränderung von Gas-Flüssigkeits-Fraktionen von Fluiden für Turbomaschinen
Capteur à base de couple et procédé de contrôle de fractions gaz-liquides variables de fluides de turbomachines

(43) Date of publication of application: 25.05.2011
(73) Proprietor: General Electric Company, Schenectady, NY 12345 (US)
(72) Inventor: Schmitz, Michael Bernhard, 85354 Freising (DE); Boris, Sergio, 20097 San Domato Milanese (IT); Cerretelli, Ciro, 80331 Muenchen (DE); Sihler, Christof Martin, 85399 Hallbergnoos (DE)
(74) Representative: Illingworth-Law, William Illingworth

(56) References cited:
- GB-A- 2 452 287
- US-A- 5 203 179
- US-A- 5 224 836
- US-A1- 2008 056 910

## Description

### BACKGROUND

The invention relates generally to torque sensing and control systems and methods, and more specifically to a torque-based sensor and method for controlling machine speed or torque characteristics in response to varying gas-liquid fractions of fluids for a rotating flow machine.

Incoming fluid in many turbomachinery applications is comprised of two or more components such as water and air, or methane, water and sand. These incoming fluid compositions can vary significantly over time. In most cases, the gas-volume-fraction (GVF) is significantly larger than the liquid/solid-volume fraction. The gas-mass-fraction and the liquid-mass-fraction however, can be equally large. Small changes in volume fraction of one or the other phase can result in significant changes on the incoming overall mass to the turbomachine. This means that the shaft torque changes significantly due to the changes in gas-volume fraction.

Control of turbomachine operating conditions in some applications typically includes direct measurements of fluids comprised of multiple species that are difficult to ascertain, especially under dynamic conditions. Therefore, only temperatures are determined at some representative points on the casing of a turbomachine. The operating conditions are then adjusted according to calibration data obtained during tests. Fluid mechanical models are sometimes used to assist this calibration approach.

US 5 203 179 A is considered as the closest prior art of the subject-matter of claim 1 and discloses the features of the preamble of the claim. Other turbomachine control techniques employ venture nozzles and dual-energy fraction meters based on nuclear detection technology to assist in adjustment of turbomachine operating conditions. An external device comprising a multiphase flow meter is required to be calibrated to the drive-motor-compressor train including the inlet pipeline conditions when using the above described techniques.

It would be both advantageous and beneficial to provide a device that is able to quantify directly the impact of changing GVF on a turbomachine compressor such that the quantified information can be used to counteract disadvantageous turbomachine behavior associated with centrifugal compressors employed in the oil and gas industry. It would be further advantageous if the device could be just as easily applied to many types of rotating flow machines such as steam turbine, multiphase rotating pumps, and aircraft engines under rain conditions to quantify directly the impact of changing GVF on the respective rotating flow machine(s).

### BRIEF DESCRIPTION

Briefly, in accordance with one embodiment, a method of controlling a rotating flow machine comprises:
measuring an inlet temperature of the rotating flow machine and predicting an outlet temperature of the rotating flow machine therefrom;
measuring rotating flow machine shaft torque and determining mass flow changes at an inlet to the rotating flow machine therefrom; and
controlling rotational speed or torque of the rotating flow machine shaft in response to the predicted outlet temperature and the mass flow changes into the rotating flow machine such that the rotating machine achieves desired operating conditions in association with changes in gas-volume-fraction at the inlet to the rotating flow machine.

According to another embodiment, a rotating flow machine control system comprises:
a flow machine having a rotational shaft;
a torque sensor configured to measure rotational shaft torque associated with the flow machine;
an algorithmic software configured to determine mass flow changes at an inlet to the rotating flow machine in response to the measured rotational shaft torque;
a temperature sensor configured to measure fluidic temperature at an inlet to the flow machine;
a temperature sensor configured to measure fluidic temperature at an outlet to the flow machine; and
a feedback control loop configured to control rotational shaft speed or rotational shaft torque of the flow machine in response to the mass flow changes, the fluidic temperature at the flow machine inlet, and the fluidic temperature at the flow machine outlet, such that the rotating machine achieves desired operating conditions in association with changes in gas-volume-fraction at the inlet to the rotating flow machine.

According to yet another embodiment, a rotating flow machine control system comprises:
a flow machine having a rotational shaft;
a torque sensor configured to measure rotational shaft torque associated with the flow machine;
an algorithmic software configured to determine mass flow changes at an inlet to the rotating flow machine in response to the measured rotational shaft torque;
a fluidic bypass actuator; and
a controller configured to control rotational shaft torque of the flow machine via causing the fluidic bypass actuator to vary the amount of fluid entering the inlet to the flow machine in real-time in response to the mass flow changes, such that the rotating machine achieves desired operating conditions in association with changes in gas-volume-fraction at the inlet to the rotating flow machine.

According to still another aspect of the invention, a method of controlling a rotating flow machine comprises:
measuring rotating flow machine shaft torque and determining gas-volume-fraction (GVF) changes at an inlet to the rotating flow machine therefrom; and
controlling rotational speed or torque of the rotating flow machine shaft in response to the GVF changes into the rotating flow machine such that the rotating machine achieves a desired operating point.

### DRAWINGS

These and other features, aspects, and advantages of the present invention will become better understood when the following detailed description is read with reference to the accompanying drawings in which like characters represent like parts throughout the drawings, wherein:
Figure 1 illustrates a rotating flow machine control system according to one embodiment of the invention; and
Figure 2 illustrates a rotating flow machine control system according to another embodiment of the invention.

While the above-identified drawing figures set forth particular embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

### DETAILED DESCRIPTION

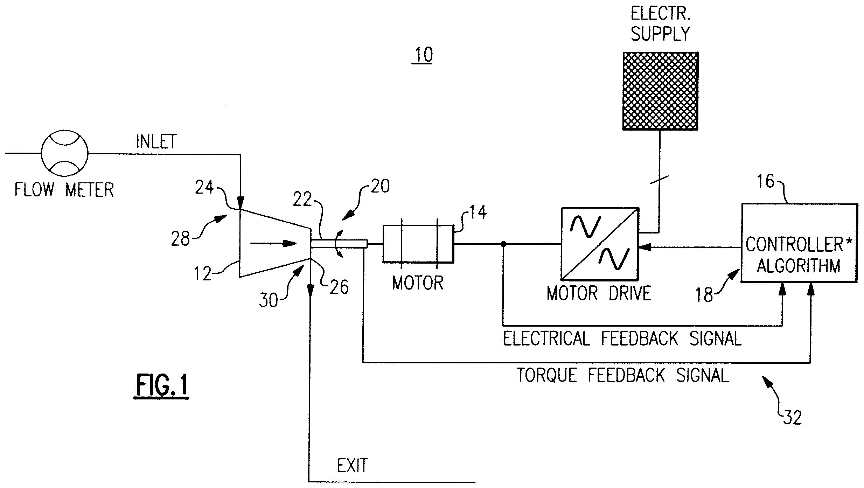

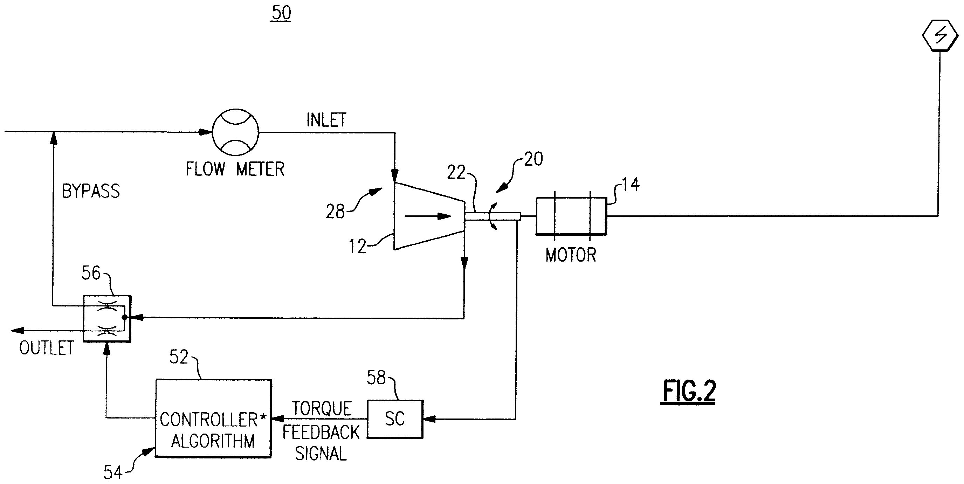

The torque of a rotating flow machine shaft such as a turbomachine shaft depends on the overall mass flow through the turbomachine and the specific enthalpy change through the machine. This can be described by the change in temperature for cases in which the fluid composition is known. In those cases, the measurements at the inlet and outlet of the turbomachine are relatively easy to obtain and are sufficient to determine the operating point of the turbomachine. The operating point of an electrical motor-driven compressor can easily be controlled by changing the rotational speed of the compressor. Undesired operating points, such as points close to or beyond the surge/stall limit of a compressor, can be avoided by changing the speed of revolution such as described below with reference to Figure 1 or by bypassing parts of the fluid such as described below with reference to Figure 2. Incoming and outgoing flow properties are not easily determined however, when multiphase flows are involved in the process.

The present inventors recognized that changes in the shaft torque itself can be used to determine the operating point, i.e. incoming changes in mass flow, provided that the principle fluid components do not change over periods of the order of the speed of revolution of the turbomachine, but only to the composition of the fluid, i.e. GVF. The changes in mass flow in this instance are related only to the changes of the fluid composition.

The exit temperature of the liquid compressed or expanded in a turbomachine is also a function of the GVF. Changes in the GVF at the inlet however, will be detected as changes in the exit temperature associated with larger time scales than the changes in mass flow caused by changes in the GVF. The latter can be detected almost instantaneously via a torque sensor; while changes in the exit temperature are on the order of the convection time of a particle that travels through the flow channel of a turbomachine.

This feature was recognized by the present inventors to provide a flow machine control system 10 described below with reference to Figure 1. A fluid mechanical model is used to predict the temperature of the fluid composition exiting the turbomachine, including consideration of condensation or evaporation. This predicted temperature, together with the measured torque/GVF, is then used to determine the direction of change of rotation, i.e. speed-up or slow-down.

The actual exit temperature is then measured at the operating point, and is used together with the model based predictions to iterate the operating point and close an iteration loop. The minimum sensor information requirements therefore include temperatures at the inlet and exit of the compressor, as well as the rotational speed. Mass flow at an initial point in time, i.e. a dry gas calibration point, is only required since the technique described herein detects changes in the mass flow.

Looking now at Figure 1, a rotating flow machine control system 10 is illustrated according to one embodiment of the invention. The rotating flow machine control system 10 includes a compressor 12; although the principles described herein are equally applicable to any type of rotating flow machine such as, without limitation, a turbomachine, i.e. steam turbine, multiphase rotary pumps, and aircraft engines under rain conditions.

Compressor 12 is driven by a suitable drive motor 14. A power control module 16 includes algorithmic software 18 described in further detail below, and is configured to control the rotational speed and/or torque characteristics of the drive motor 14.

A torque sensor 20 is configured to measure the torque on the motor/compressor shaft 22, while temperature sensors 24, 26 at the respective compressor fluidic input and output ports 28, 30 are each configured to measure its corresponding fluidic temperature.

The algorithmic software 18 is configured to determine mass flow changes at the inlet 28 to the compressor 12 in response to the measured rotational shaft torque.

A feedback control loop 32 is configured to control the rotational shaft 22 speed or rotational shaft 22 torque of the flow machine 12 in response to the mass flow changes determined via the algorithmic software 18, the fluidic temperature at the flow machine inlet 28, and the fluidic temperature at the flow machine outlet 30, such that the rotating machine/compressor 12 achieves desired operating conditions in association with changes in gas-volume-fraction at the inlet to the rotating flow machine 12.

In summary explanation, torque sensing and control methods detect varying gas-liquid fractions of a fluid entering a rotating flow machine 12 that operates with a fluid having variable liquid phases and compositions. A changing liquid composition results in a respective changing torque on the rotating shaft 22 of the rotating flow machine 12. The measured shaft torque is then used to detect the gas-liquid fraction; and this information is fed to a control algorithm 18 that controls the operating point of the rotating flow machine 12.

Setting the control algorithm 18 so that it can change the torque and therefore the rotational speed of the rotating flow machine 12 in response to information about the actual gas-liquid fraction is desirable to achieve safer operating conditions or conditions with higher efficiency or higher power output under varying liquid compositions that otherwise result in varying torque on the rotating shaft 22 of the rotating flow machine 12, leading eventually to damages to the rotating flow machine 12 under unwanted operating conditions sometimes close or beyond the stall or surge limit(s).

The rotating flow machine control system 10 is therefore based on high-speed torque acquisition that is used to determine the gas volume fraction at the rotating flow machine inlet 28. Moreover, the sensed signal from the torque sensor 20 is fed into a power control module 16 feedback control loop 32 to determine an improved operating point for the rotating flow machine 12 that better suits the needs of the new fluid composition.

Figure 2 illustrates a rotating flow machine control system 50 according to another embodiment of the invention. The rotating flow machine control system 50 includes a compressor 12; although the principles described herein are equally applicable to any type of rotating flow machine such as, without limitation, a turbomachine, i.e. steam turbine, multiphase rotary pumps, and aircraft engines under rain conditions.

Compressor 12 is driven by a suitable drive motor 14. A controller 52 includes algorithmic software 54 described in further detail below, and is configured in combination with a shaft torque sensor 20 to control a fluid bypass actuator 56 in response to the rotational shaft 22 torque of the compressor 12.

The algorithmic software 54 is configured to determine mass flow changes at the inlet 28 to the compressor 12 in response to the measured rotational shaft torque. This information is then used to control the amount of fluid flowing through the compressor inlet 28 in real-time via a fluid bypass actuator 56, such that the rotating machine/compressor 12 achieves desired operating conditions in association with changes in gas-volume-fraction at the inlet 28 to the rotating flow machine 12. Although described in terms of a variable speed rotating machine, this technique applies equally well to fixed speed rotating machines.

Modern torque sensors based on magnetic shaft encoding can achieve a measurement repeatability of 99.99% and a signal bandwidth up to 30 kHz if all primary and secondary sensor design requirements are fulfilled, requiring an optimized design for each type of application. Considering and integrating the optimized sensor design during the design stage of the rotating flow machine control system 10 enables detection of even very small changes in volume fraction of one or the other phase in a reliable manner, allowing this information to be employed in advanced performance control circuits such as described herein.

A flow machine control system such as described herein with reference to the Figures can be configured, without limitation, for use with a variable speed motor to drive a compressor or for use with a variable speed energy generator to drive a turbine (or with fixed speed machines). The control system in each instance provides for fast reaction times suitable for changing mass flow, shaft speed and/or torque.

A fast reacting torque sensor for turbomachinery operated at 10,000 rpm requires a reaction within 6 msec, which equates to one rotational cycle. State of the art shaft encoded torque sensors have signal bandwidths up to 30 kHz, as stated above, meaning that they can detect events on a 30 microsecond time scale. Such sensors however may be limited in use as an input for control circuits since they may also be sensitive to electromagnetic or other disturbances.

Using the output of a torque sensing system in association with fast acting controls in one embodiment requires a special sensor design, especially if real-time behavior of the sensed signal is needed, i.e. improving the signal quality by filtering or standard signal processing methods cannot be applied. This sensor design according to one embodiment requires shielding of the magnetic field sensing coils against external electromagnetic disturbances. The magnetic field sensing coils, for example, must be positioned inside of a metallic tube (alternatively a cylindrical metallic cover around the shaft). In addition, multiple magnetic field sensor pairs according to one embodiment must be positioned around the shaft 22. They can be used to exclude that lateral movements of the shaft or external fields that impact the measurement result, e. g. in performing differential measurements, comparing and summarizing the relevant field components from different positions around the shaft, so that only true torque is measured at all times.

Alternatively, an integration based shaft power or torque measurement method could be used to generate a more reliable input signal for the control algorithm. Such a method may employ a number of magnetically encoded regions, induction coils and integration sections configured to provide a required time resolution for specific applications, e.g. 1ms. Air core induction coils can be employed in a solution that allows their application in a much higher temperature range than permanent magnetic field sensing solutions.

In further summary explanation, a torque-based sensor and control method have been described for rotational flow control machines such as a turbomachine that operates on varying gas-liquid fractions of fluids. According to one aspect, a calibration event is provided at the beginning of the process. A feedback loop is provided that feeds the turbomachine shaft torque information back to a turbomachine control system. Temperature sensors are provided at an inlet and exit of the turbomachine. A torque sensor is provided that measures the rotational speed of the turbomachine. Known information about the liquid components, i.e. gas- type, liquid-type is provided. A fluidmechanical model of the turbomachine running under multiphase conditions is provided in which changes in GVF cause a change in overall mass flow. Turbomachine exit temperature(s) and pressure(s) are predicted based on the measured speed and inlet temperature(s). A new operating point is predicted via the fluidmechanical model; and if this operating point is unwanted, the rotational speed or a bypass mechanism or other installed means to influence the operating point of the turbomachine can be used to change the actual operating point. A continuous monitoring of the changes in the inlet and exit quantities then allows a stable settling of a new operating point.

While only certain features of the invention have been illustrated and described herein, many modifications and changes will occur to those skilled in the art. It is, therefore, to be understood that the appended claims are intended to cover all such modifications and changes.

Aspects of the present invention are defined in the following numbered clauses:
1. A method of controlling a rotating flow machine, the method comprising:
   measuring an inlet temperature of the rotating flow machine and predicting an outlet temperature of the rotating flow machine therefrom;
   measuring rotating flow machine shaft torque and determining mass flow changes at an inlet to the rotating flow machine therefrom; and
   controlling rotational speed or torque of the rotating flow machine shaft in response to the predicted outlet temperature and the mass flow changes into the rotating flow machine such that the rotating machine achieves desired operating conditions in association with changes in gas-volume-fraction at the inlet to the rotating flow machine.
2. The method according to clause 1, wherein controlling rotational speed or torque of the rotating flow machine shaft in response to the predicted outlet temperature and the mass flow changes into the rotating flow machine comprises inputting the predicted outlet temperature information and the mass flow change information into a fluidmechanical algorithmic model configured to generate the desired operating conditions.
3. The method according to clause 1, wherein the desired operating conditions are selected from rotating flow machine shaft torque and rotating flow machine shaft speed.
4. The method according to clause 1, wherein the rotating flow machine is selected from compressors, turbines, multiphase rotary pumps, and aircraft engines under rain conditions.
5. The method according to clause 1, further comprising performing an initial calibration event to determine the actual operating point of the rotating flow machine, prior to measuring the inlet temperature and the rotating flow machine shaft torque, and prior to controlling rotational speed or torque of the rotating flow machine shaft.
6. A rotating flow machine control system comprising:
   a flow machine having a rotational shaft;
   a torque sensor configured to measure rotational shaft torque associated with the flow machine;
   an algorithmic software configured to determine mass flow changes at an inlet to the rotating flow machine in response to the measured rotational shaft torque;
   a temperature sensor configured to measure fluidic temperature at an inlet to the flow machine;
   a temperature sensor configured to measure fluidic temperature at an outlet to the flow machine; and
   a feedback control loop configured to control rotational shaft speed or rotational shaft torque of the flow machine in response to the mass flow changes, the fluidic temperature at the flow machine inlet, and the fluidic temperature at the flow machine outlet, such that the rotating machine achieves desired operating conditions in association with changes in gas-volume-fraction at the inlet to the rotating flow machine.
7. The rotating flow machine control system according to clause 6, wherein the rotating flow machine is selected from compressors, turbines, multiphase rotary pumps, and aircraft engines under rain conditions.
8. The rotating flow machine control system according to clause 6, wherein the torque sensor is configured to measure and generate torque information within one rotational cycle of the rotating flow machine.
9. The rotating flow machine control system according to clause 6, wherein the torque sensor is at least partially integrated into the rotational shaft.
10. The rotating flow machine control system according to clause 6, wherein the torques sensor is based on a magnetically encoded rotational shaft or magnetically encoded parts attached to the rotational shaft.
11. The rotating flow machine control system according to clause 6, wherein the algorithmic software comprises a fluidmechanical model of the rotating flow machine running under multiphase conditions.
12. The rotating flow machine control system according to clause 6, wherein the desired operating conditions are selected from rotating flow machine shaft torque and rotating flow machine shaft speed.
13. A rotating flow machine control system comprising:
   a flow machine having a rotational shaft;
   a torque sensor configured to measure rotational shaft torque associated with the flow machine;
   an algorithmic software configured to determine mass flow changes at an inlet to the rotating flow machine in response to the measured rotational shaft torque;
   a fluidic bypass actuator; and
   a controller configured to control rotational shaft torque of the flow machine via causing the fluidic bypass actuator to vary the amount of fluid entering the inlet to the flow machine in real-time in response to the mass flow changes, such that the rotating machine achieves desired operating conditions in association with changes in gas-volume-fraction at the inlet to the rotating flow machine.
14. The rotating flow machine control system according to clause 13, wherein the rotating flow machine is selected from compressors, turbines, multiphase rotary pumps, and aircraft engines under rain conditions.
15. The rotating flow machine control system according to clause 13, wherein the torque sensor comprises a magnetic sensor based on magnetic encoding of the rotational shaft or parts attached to the rotational shaft.
16. The rotating flow machine control system according to clause 13, wherein the torque sensor is at least partially integrated into the rotational shaft.
17. The rotating flow machine control system according to clause 13, wherein the algorithmic software comprises a fluidmechanical model of the rotating flow machine running under multiphase conditions.
18. A method of controlling a rotating flow machine, the method comprising:
   measuring rotating flow machine shaft torque and determining gas-volume-fraction (GVF) changes at an inlet to the rotating flow machine therefrom; and
   controlling rotational speed or torque of the rotating flow machine shaft in response to the GVF changes into the rotating flow machine such that the rotating machine achieves a desired operating point.
19. The method according to clause 18, further comprising measuring an inlet temperature of the rotating flow machine and predicting an outlet temperature of the rotating flow machine therefrom.
20. The method according to clause 19, further comprising inputting the predicted outlet temperature information and the GVF information into a fluidmechanical algorithmic model configured to generate the desired operating point.

## Claims

1. A rotating flow machine control system (10) comprising:
a flow machine (12) having a rotational shaft (22);
a temperature sensor (24) configured to measure fluidic temperature at an inlet (28) to the flow machine (12);
a temperature sensor (26) configured to measure fluidic temperature at an outlet (30) to the flow machine (12);
**characterized in that**
a torque sensor (20) is provided to measure rotational shaft torque associated with the flow machine (12);
and an algorithmic software (18) is provided to determine mass flow changes at an inlet (28) to the rotating flow machine (12) in response to the measured rotational shaft torque; and
a feedback control loop (32) is provided to control rotational shaft speed or rotational shaft torque of the flow machine (12) in response to the mass flow changes, the fluidic temperature at the flow machine inlet (28), and the fluidic temperature at the flow machine outlet (30), such that the rotating machine (12) achieves desired operating conditions in association with changes in gas-volume-fraction at the inlet to the rotating flow machine (12).

2. The rotating flow machine control system (10) according to claim 1, wherein the torque sensor (20) is configured to measure and generate torque information within one rotational cycle of the rotating flow machine (12).

3. The rotating flow machine control system (10) according to claim 1 or claim 2, wherein the torque sensor (20) is at least partially integrated into the rotational shaft (22).

4. The rotating flow machine control system (10) according to any one of the preceding claims, wherein the torque sensor (20) is based on a magnetically encoded rotational shaft or magnetically encoded parts attached to the rotational shaft (22).

5. The rotating flow machine control system (10) according to any one of the preceding claims, wherein the algorithmic software (18) comprises a fluidmechanical model of the rotating flow machine (12) running under multiphase conditions.

6. The rotating flow machine control system (10) according to any one of the preceding claims, wherein the desired operating conditions are selected from rotating flow machine shaft torque and rotating flow machine shaft speed.

## Patentansprüche

1. Drehströmungsmaschinensteuersystem (10), umfassend:
eine Strömungsmaschine (12) mit einer Drehwelle (22);
einen Temperatursensor (24), der zum Messen einer Fluidtemperatur an einem Einlass (28) zur Strömungsmaschine (12) konfiguriert ist;
einen Temperatursensor (26), der zum Messen einer Fluidtemperatur an einem Auslass (30) aus der Strömungsmaschine (12) konfiguriert ist;
**dadurch gekennzeichnet, dass**
ein Drehmomentsensor (20) zum Messen eines Drehwellendrehmoments, das der Strömungsmaschine (12) zugeordnet ist, vorgesehen ist;
und eine Algorithmussoftware (18) zum Bestimmen von Massenstromänderungen an einem Einlass (28) zur Drehströmungsmaschine (12) in Reaktion auf das gemessene Drehwellendrehmoment vorgesehen ist; und
eine Rückkopplungsschleife (32) zum Steuern der Drehwellendrehzahl oder des Drehwellendrehmoments der Strömungsmaschine (12) in Reaktion auf die Massenstromänderungen, die Fluidtemperatur am Strömungsmaschineneinlass (28) und die Fluidtemperaturen am Strömungsmaschinenauslass (30) vorgesehen ist, sodass die Drehströmungsmaschine (12) erwünschte Betriebsbedingungen in Zusammenhang mit Änderungen des Gas/Volumen-Anteils am Einlass zur Drehströmungsmaschine (12) erreicht.

2. Drehströmungsmaschinensteuersystem (10) nach Anspruch 1, wobei der Drehmomentsensor (20) zum Messen und Erstellen von Drehmomentinformation innerhalb eines Drehzyklus der Drehströmungsmaschine (12) konfiguriert ist.

3. Drehströmungsmaschinensteuersystem (10) nach einem der Ansprüche 1 oder 2, wobei der Drehmomentsensor (20) zumindest teilweise in die Drehwelle (22) eingegliedert ist.

4. Drehströmungsmaschinensteuersystem (10) nach einem der vorhergehenden Ansprüche, wobei der Drehmomentsensor (20) auf einer magnetisch kodierten Drehwelle oder magnetisch kodierten Teilen, die an der Drehwelle (22) angebracht sind, basiert.

5. Drehströmungsmaschinesteuersystem (10) nach einem der vorhergehenden Ansprüche, wobei die Algorithmussoftware (18) ein strömungsmechanisches Modell der Drehströmungsmaschine (12) umfasst, das unter Mehrphasenbedingungen arbeitet.

6. Drehströmungsmaschinesteuersystem (10) nach einem der vorhergehenden Ansprüche, wobei die erwünschten Betriebsbedingungen aus Drehströmungsmaschinewellendrehmoment und Drehströmungsmaschinenwellendrehzahl ausgewählt sind.

## Revendications

1. Système de commande de machine d'écoulement rotative (10) comprenant :
une machine d'écoulement (12) ayant un arbre rotatif (22) ;
un capteur de température (24) configuré pour mesurer la température fluidique à une entrée (28) dans la machine d'écoulement (12) ;
un capteur de température (26) configuré pour mesurer la température fluidique à une sortie (30) dans la machine d'écoulement (12) ;
**caractérisé en ce que** :
un capteur de couple (20) est prévu pour mesurer le couple de l'arbre rotatif associé à la machine d'écoulement (12) ; et
un logiciel algorithmique (18) est prévu pour déterminer des changements d'écoulement massique à une entrée (28) dans la machine d'écoulement rotative (12) en réponse au couple mesuré de l'arbre rotatif ; et
une boucle de commande de rétroaction (32) est prévue pour commander la vitesse de l'arbre rotatif ou le couple de l'arbre rotatif de la machine d'écoulement (12) en réponse aux changements d'écoulement massique, la température fluidique à l'entrée (28) de la machine d'écoulement et la température fluidique à la sortie (30) de la machine d'écoulement de sorte que la machine rotative (12) assume des conditions de fonctionnement souhaitées en association avec les changements de la fraction de volume gazeux à l'entrée dans la machine d'écoulement rotative (12).

2. Système de commande de machine d'écoulement rotative (10) selon la revendication 1, dans lequel le capteur de couple (20) est configuré pour mesurer et générer des informations de couple dans un cycle de rotation de la machine d'écoulement rotative (12).

3. Système de commande de machine d'écoulement rotative (10) selon la revendication 1 ou la revendication 2, dans lequel le capteur de couple (20) est au moins en partie intégré à l'arbre rotatif (22).

4. Système de commande de machine d'écoulement rotative (10) selon l'une quelconque des revendications précédentes, dans lequel le capteur de couple (20) est basé sur un arbre de rotation codé magnétiquement ou des pièces codées magnétiquement fixées à l'arbre rotatif (22).

5. Système de commande de machine d'écoulement rotative (10) selon l'une quelconque des revendications précédentes, dans lequel le logiciel algorithmique (18) comprend un modèle de mécanique fluidique de la machine d'écoulement rotative (12) tournant dans des conditions multiphases.

6. Système de commande de machine d'écoulement rotative (10) selon l'une quelconque des revendications précédentes, dans lequel les conditions de fonctionnement souhaitées sont choisies parmi un couple d'arbre de la machine d'écoulement rotative et une vitesse de l'arbre de la machine d'écoulement rotative.
